# EUROPEAN PATENT APPLICATION

(11) **EP 4 693 872 A1**
(43) Date of publication of application: **11.02.2026**
(21) Application number: 23921569.2
(22) Date of filing: 05.04.2023
(51) Int. Cl.: H02M 7/06, H03K 3/01, H02P 13/00

(54) **GENERATOR FOR ELECTRICAL ENERGY PRODUCTION**

(71) Applicant: Peretyachenko, Vitaly Gennadievich, 010766 Bucharest (RO); Krishevich, Oleg Konstantinovich, St. Petersburg 193079 (RU)
(72) Inventor: Peretyachenko, Vitaly Gennadievich, 010766 Bucharest (RO); Krishevich, Oleg Konstantinovich, St. Petersburg 193079 (RU)
(74) Representative: Spengler, Robert
(86) International application number: PCT/IB2023/053488
(87) International publication number: WO 2024/209235

(57) **Abstract**

The present invention relates to a generator for production of electric energy in which electric energy source (1) is connected to an energy storage capacitor of a discharger unit (3) which is series-connected to primary winding (4) of transformer (5), secondary high-voltage winding (7) of which, together with parallel-connected capacitor (8) connected in parallel form a resonant circuit establishing the positive feedback with the energy storage capacitor of the discharger unit (3), and tertiary winding (10) of transformer (5) feeds load (13) via rectifier (12), characterized in that the discharger unit (3) is executed as several discharger units (14, 15, 16) connected in parallel, and characterized by different values of breakdown voltage and by shifted relative to each other, but overlapping, frequency spectrums.

## Description

The present invention relates to electric power engineering and may be used in power supply systems of different sectors of national economy: industrial, agricultural, defense, transport and amenity facilities.

The prior art describes a device for production of electric energy according to RU 2261521 (published on September 27, 2005) consisting of an electric energy source feeding a current pulse generator which output is connected to an energy storage capacitor and a discharger connected in series to primary winding of a transformer, which secondary high-voltage winding and a parallel connected capacitor form a resonant circuit, which with the use of a diode establishes a positive feedback with the storage capacitor of the discharger, and the transformer tertiary winding feeds the load via a rectifier bridge.

A disadvantage of the said electric energy generator is that in the course of time, because of oxide formation and partial mechanical disintegration of the discharger electrodes, a change in discharge frequency of the discharger is observed which initiates oscillations in the transformer tertiary winding circuit. A process of the discharger electrodes disintegration is due to presence of plasma between the electrodes causing electric erosion disintegration of the electrode metal which inevitably results in an increase of distance between them relative to the initial distance and a shift in frequency spectrum of the discharger oscillations relative to the resonance frequency of the transformer primary winding circuit. Therefore, spectral density of the discharge current at resonance frequency of the transformer primary winding circuit is decreasing which may lead to the device service outage. The shift in frequency spectrum of the discharger may also be determined by a change in air conditions in the discharge gap. It is common knowledge that the discharge repetition frequency increases as the air humidity increases (publication by Pengfei Xu, Bo Zhang, Shuiming Chen, and Jinliang He, "Influence of humidity on the characteristics of positive corona discharge in air", Physics of Plasmas 23, 063511 (2016); https://doi.org/10.1063/1.4953890).

The technical result of the claimed invention lies in improvement of the generator operation reliability and consistency to produce electric energy.

The technical result is achieved in the generator for production of electric energy, designed with a possibility of connection to the starting electric energy source and disconnection from it, which output is connected, via the rectifier, to the energy storage capacitor of the discharger unit series-connected to the primary winding of the transformer, which secondary high-voltage winding together with the parallel-connected capacitor form a resonant circuit establishing the positive feedback with the energy storage capacitor of the discharger unit, and the transformer tertiary winding feeds, via the rectifier, the load, wherein the discharger unit is executed as several dischargers connected in parallel and characterized by different values of breakdown voltage and by shifted relative to each other, but overlapping, frequency spectrums, wherein the energy storage capacitor comprises several capacitors, each of which is connected to a separate discharger of the discharger unit. Moreover, the number of dischargers is equal to the number of storage capacitors and rectifiers connected to them through which they are charged from the starting source or from the positive feedback circuit.

When using several dischargers connected in parallel and characterized by different values of breakdown voltage and by shifted, relative to each other, but overlapping frequency spectrums, the spectral densities of the dischargers at the resonance frequency of the transformer primary winding circuit are added up and, at a shift in frequency spectrum of the first discharger oscillations relative to the resonance frequency of the transformer primary winding circuit (for example, due to an increase of distances between the electrodes in the course of time or change in air conditions in the discharge gap) ensure an increase in the cumulative spectral density due to a contribution of the spectral density of another or other dischargers, which spectrums are overlapping with the first discharger spectrum. Thus, the technical result is achieved in terms of improved reliability and stability of operation of the device for generating electric power in case of a shift in frequency spectrum of the discharger due to a change of distance between the electrodes or air conditions in the discharge gap.

In a preferred embodiment dischargers of the discharger unit are with shifts in frequency spectrums ensuring a close-to-uniform cumulative spectral density in the range of the discharger frequencies.

In a preferred embodiment, the transformer primary winding circuit is in the form of a slab coil with a resonance frequency of 2.45 MHz.

In a preferred embodiment the rectifier is in the form of a diode bridge.

In a preferred embodiment, the dischargers are with shifts in frequency spectrum of 1-20 kHz relative to each other.

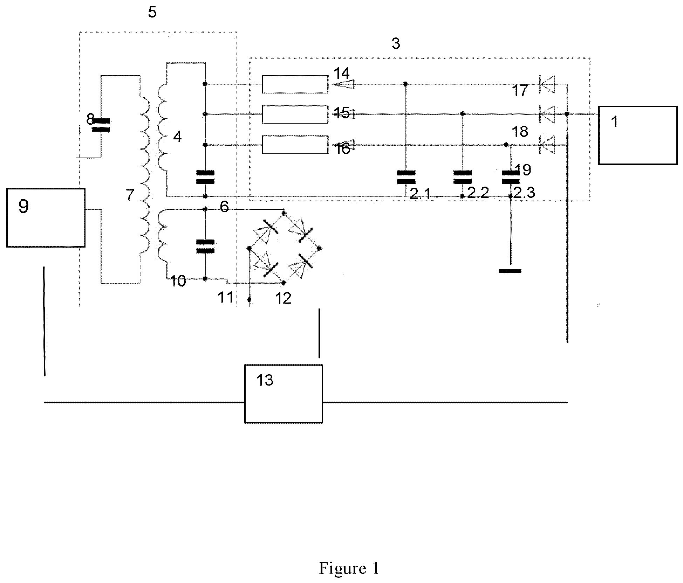

The principal of operation of the generator for production of electric energy is explained in Figure 1 showing its block flow diagram.

The generator for production of electric energy is implemented in a generator connected to starting electric energy source 1, which output is connected to energy storage capacitor executed of capacitors 2.1, 2.2, 2.3 of discharger unit 3 series-connected to primary winding 4 of transformer 5, which together with parallel-connected capacitor 6 form a resonant circuit, and which secondary high-voltage winding 7 together with parallel-connected capacitor 8 form a resonant circuit, with positive feedback unit 9 of this circuit with capacitors 2.1, 2.2 and 2.3 of discharger unit 3, wherein tertiary winding 10 of transformer 5 which together with parallel-connected capacitor 11 form a resonant circuit and feeds load 13 via rectifier 12 executed according to diode bridge scheme, wherein discharger unit 3 comprises first discharger 14, second discharger 15 and third discharger 16 connected in parallel and characterized by different values of breakdown voltage and by shifted relative to each other by 10 kHz, but overlapping frequency spectrums. Oscillations in the circuits formed in the primary, secondary and tertiary windings are initiated using a starting source. Then, due to positive feedback, they are transmitted to storage capacitors, which are charged and, after discharging the dischargers, initiate oscillations in the primary winding circuit, which excite oscillations in the secondary and tertiary windings. Due to the positive feedback and the conversion of the rectifiers 17, 18, 19 of the alternating voltage from the secondary winding to a constant, the constant voltage charges the storage capacitors and the process repeats. After that, the starting source can be turned off. Energy accumulation for the continuation of the process and obtaining energy on the load is carried out by multiplying the number of electrons in the gaps of the dischargers during ionization of air molecules due to their collision with the electrons of streamers arising during discharge.

The generator for production of electric energy operates as follows.

The starting electric energy source 1 serves to start the generator for production of electric energy and is used only at the initial moment and comprises electric energy source, wherein electric mains, accumulator, battery or low-to-high voltage converter may be used in this capacity, from which voltage is applied to capacitors 2.1, 2.2, 2.3 through diodes, and through first discharger 14, second discharger 15 and third discharger 16 of discharger unit 3 - to primary winding 4 of transformer 5 which together with parallel-connected capacitor 6 form a resonant circuit. Electric charges accumulated by capacitors 2.1, 2.2 and 2.3 from starting electric energy source 1 are applied to primary winding 4 of transformer 5 via first discharger 14, second discharger 15 and third discharger 16 of discharger unit 3, wherewith to establish a magnetic field with high spatial voltage gradient in surrounding space. At that, streamers of corona discharge are formed in first discharger 14, second discharger 15 and third discharger 16 of discharger unit 3 due to impact ionization air molecules by electrons and generation of avalanche electron flows near anode target tip due to highly non-uniform field. Air molecules ions, being much more massive, fail to reach the cathode in the time of discharge pulse and form a bulk charge near the cathode which interrupts the corona discharge pulse and slowly dissipates in the surrounding space or recombine with electrons flowing into the discharge gap form the cathode. Photoionization of air molecules, arising by the action of ultraviolet radiation of the streamers on them, is also of great importance for the avalanche development. Thus, pulses of current are generated in discharger unit 3, which current is exceeding current of electrons initiating the corona discharge.

On completion of the discharge in discharger unit 3, the primary winding magnetic field is transmitted by induction to secondary winding 7 of transformer 5 which together with capacitor 8 form a resonant circuit. Voltage from secondary winding 6 of transformer 5 is transferred to capacitors 2.1, 2.2, 2.3 via positive feedback unit 9, and rectifiers 17, 18, 19, thus implementing the positive feedback. After a lapse of time, required for the generator build-up, starting electric energy source 1 is switched off.

In a lapse of time which is characteristic of each discharger of discharger unit 3, the electric charge accumulated by capacitors 2.1, 2.2, 2.3 is fed, when they discharged, to primary winding 4 of transformer 5, around which a pulsed magnetic field with increased energy is generated due to formation of streamers of corona discharge. Further, due to induction energy is fed to secondary winding 7 of transformer 5 forming a resonant circuit together with capacitor 8. The obtained energy excess is removed by tertiary winding 10 of transformer 5 forming a resonant circuit together with capacitor 11 and feeds load 13 via rectifier 12 executed according to diode bridge scheme.

Let the spectral density maximum of the frequency spectrum of first discharger 14 originally coincides with the resonance frequency of the circuit formed by primary winding 4 of transformer 5, and maxima of the spectral density of second discharger 15 and third discharger 16 are positioned on both sides of the spectral density maximum of the frequency spectrum of first discharger 14. Then, in case of a shift of the spectral density maximum of the frequency spectrum of first discharger 14, for example, in the direction of the spectral density maximum of the frequency spectrum of second discharger 15, which shift is due to a change in distance between electrodes of first 14, second 15 and third 16 dischargers or a change in air condition in the discharge gap, the spectral density of first discharger 14 at the resonance frequency of the primary winding circuit 4 of transformer 5 shall decrease, however, the spectral density of the frequency spectrum of third discharger 16 shall increase at that. In case of a shift of the spectral density maximum of the frequency spectrum of first discharger 14 in the direction of the spectral density maximum of the frequency spectrum of third discharger 16, the spectral density of first discharger 14 at the resonance frequency of the primary winding circuit 4 of transformer 5 shall decrease, however, the spectral density of the frequency spectrum of second discharger 15 shall increase at that, compensating the decrease in the spectral density of the frequency spectrum of first discharger 14. That is, use of several dischargers - first 14, second 15 and third 16, executed with a shift of the spectral density maximum of the frequency spectrum relative to each other, when their spectrums overlap, shall ensure higher reliability and consistency of operation of the generator for production of electric energy by compensating the spectral density decrease of first discharger 14 at the resonance frequency of the primary winding circuit via increase of the spectral density of second discharger 15 or third discharger 16 of discharger unit 3.

Stabilization of amplitude of the spectral density of the dischargers at the resonance frequency of the primary winding circuit 4 of transformer 5 for two and more of the dischargers of discharger unit 3 is done similarly.

Thus, when using several dischargers connected in parallel, characterized by different values of breakdown voltage and by shifted, relative to each other, but overlapping frequency spectrums, spectral densities of the dischargers at the resonance frequency of the transformer primary winding circuit are added and, at a shift in frequency spectrum of the first discharger oscillations relative to the resonance frequency of the transformer primary winding circuit (for example, due to increase of distance between the electrodes in the course of time or change in air conditions in the discharge gap) ensure an increase in the cumulative spectral density due to the contribution of the spectral density of another or other dischargers, which spectrums are overlapping with the first discharger spectrum. Therefore, in the described generator for production of electric energy the attainment of the technical result is ensured in the form of higher reliability and consistency of operation of the generator for production of electric energy. In this case, the technical result will also be achieved for two or more dischargers, and the number of dischargers is equal to the number of storage capacitors and rectifiers connected to them, through which these capacitors are charged from the starting source or from the positive feedback circuit.

## Claims

1. The generator for production of electric energy, designed with a possibility of connection to starting electric energy source (1) and disconnection from it, wherein the source output is connected, via the rectifier, to the energy storage capacitor of the discharger unit (3) which is series-connected to primary winding (4) of transformer (5), which secondary high-voltage winding (7) together with parallel-connected capacitor (8) form a resonant circuit establishing the positive feedback with the energy storage capacitor of the discharger unit (3), and the transformer (5) tertiary winding (10) feeds the load via rectifier, *wherein* the discharger unit (3) is executed as several dischargers (14,15,16) connected in parallel and **characterized by** different values of breakdown voltage and by shifted relative to each other, but overlapping, frequency spectrums, and the energy storage capacitor comprises several capacitors (2.1,2.2,2.3), each of which is connected to a separate discharger (14,15,16) and to rectifier (17, 18, 19) of the discharger unit (3).

2. The generator for production of electric energy according to claim *1, wherein* the dischargers of the discharger unit (3) are executed with shifts of the frequency spectrums ensuring a close-to-uniform cumulative spectral density in the frequency range of the dischargers.

3. The generator for production of electric energy according to claim *1, wherein* the primary winding (4) of the transformer (5) is executed as a slab coil with a circuit resonance frequency of 2.45 MHz.

4. The generator for production of electric energy according to claim *1, wherein* the rectifier (12) of the tertiary winding (10) is executed as a diode bridge.

5. The generator for production of electric energy according to claim *1, wherein* the dischargers of the discharger unit |(3) are executed with shifts in the frequency spectrum of 1-20 kHz relative to each other.
